# FASCICULE DE BREVET EUROPEEN

(11) **EP 2 983 167 B1**
(45) Date de publication et mention de la délivrance du brevet: **01.05.2019**
(21) Numéro de dépôt: 15180270.9
(22) Date de dépôt: 07.08.2015
(51) Int. Cl.: G09G 3/20, G09G 3/36, G09G 3/34

(54) **AFFICHEUR LCD AVEC ADRESSAGE DE LIGNES PAR ECHANTILLONNAGE ET CONVERSION, ET PROCEDE D'AFFICHAGE**
LCD-ANZEIGEGERÄT MIT ZEILENADRESSIERUNG DURCH STICHPROBENERFASSUNG UND UMWANDLUNG, SOWIE ANZEIGEVERFAHREN
LCD DISPLAY WITH LINE ADDRESSING BY SAMPLING AND CONVERSION, AND DISPLAY METHOD

(30) Priorité: 08.08.2014 FR 1401822
(43) Date de publication de la demande: 10.02.2016
(73) Titulaire: THALES, 92400 Courbevoie (FR)
(72) Inventeur: KRETZ, Thierry, 38430 SAINT JEAN DE MOIRANS (FR); GOMEZ, Gérard, 38100 GRENOBLE (FR); LEBRUN, Hugues, 38500 COUBLEVIE (FR)
(74) Mandataire: Desvignes, Agnès

(56) Documents cités:
- US-A1- 2006 007 098
- Anonymous: "Serial-in, Parallel-out Shift Register : Chapter 12 - Shift Registers - Electronics Textbook", , 22 juin 2005 (2005-06-22), XP055233653, Extrait de l'Internet: URL:http://www.allaboutcircuits.com/textbo ok/digital/chpt-12/serial-in-parallel-out- shift-register/ [extrait le 2015-12-04]

## Description

### DOMAINE TECHNIQUE

L'invention concerne les afficheurs à cristaux liquides. Elle s'applique notamment mais non exclusivement aux afficheurs séquentiel couleur et l'invention sera décrite en détail à propos d'un afficheur séquentiel couleur.

### ETAT DE L'ART

Ces afficheurs comportent une boîte à lumière avec des sources de lumière de plusieurs couleurs, allumées successivement et non simultanément. Dans ce qui suit on ne parlera que des couleurs les plus classiques, rouge (R), vert (V), bleu (B) bien que d'autres couleurs puissent être utilisées suivant des répartitions différentes. Des afficheurs n'utilisant que deux couleurs, par exemple vert et rouge sont concernés également. Les pixels de l'afficheur ne comportent pas de filtres colorés. L'image à afficher est décomposée électroniquement en trois composantes chromatiques correspondant aux trois couleurs. Les pixels sont commandés en fonction de la composante rouge de l'image à afficher, la lumière rouge est allumée puis éteinte, puis les pixels sont commandés en fonction de la composante verte, la lumière verte est allumée puis éteinte, et enfin les pixels sont commandés en fonction de la lumière bleue et la lumière bleue est allumée puis éteinte. La cadence rapide de ces commandes et allumages fait que l'oeil humain voit une image colorée mélangeant les trois composantes comme si ces trois composantes étaient affichées simultanément.

Une trame d'image comprend donc trois sous-trames. Pour éviter une gêne visuelle due à un phénomène dit de "colour breakup", les sous-trames peuvent être divisées chacune en deux ou trois, c'est-à-dire qu'il y aurait deux ou trois sous-trames rouges affichant la même image, deux ou trois vertes et deux ou trois bleues, dans une même trame. Chaque sous-trame comprend une phase d'écriture, ligne par ligne, de tous les niveaux de luminance des points de l'image pour la couleur considérée ; puis une phase de stabilisation tenant compte du temps de réaction du cristal liquide ; puis une phase d'allumage de la source de la couleur considérée de la boîte à lumière. Pour une trame de 16,67 millisecondes (fonctionnement à 60Hz), avec six sous-trames de 2,78 millisecondes, ces trois phases peuvent durer typiquement 0,7 milliseconde, 1,07 milliseconde, et 1 milliseconde. La phase d'écriture se décompose en une écriture de N lignes successives ; par exemple N=256 et la durée réservée à l'écriture d'une ligne est alors inférieure à 3 microsecondes.

Un affichage séquentiel couleur nécessite donc des cristaux liquides et des circuits de commande à commutation très rapide, faute de quoi l'image affichée risque de présenter des défauts. L'invention a pour but de limiter les contraintes de rapidité de commutation pour les afficheurs séquentiel couleur principalement, mais elle s'applique aussi aux afficheurs à mosaïque de pixels colorés tout particulièrement lorsqu'ils doivent afficher des informations (texte, symboles, etc.) qui ne sont pas des images vidéo.

Dans certaines applications d'affichage en mode séquentiel couleur, on affiche dans une première couleur spécifique des informations particulières, alors que le fond de l'image est affiché dans la ou les autres couleurs. C'est le cas par exemple (mais pas exclusivement) dans des afficheurs du domaine de l'avionique ou d'autres domaines où l'affichage d'informations importantes est demandé en superposition avec une image de fond.

Pour simplifier les explications on prendra l'exemple d'un afficheur bicolore où des informations critiques sont affichées en une première couleur rouge en superposition sur une image de fond affichée en vert, par exemple l'image d'un paysage. Mais l'invention s'applique aussi si l'image de fond utilise deux couleurs ou plus, autres que la première couleur réservée aux informations et elle s'applique même comme on le verra si le fond est noir. Les informations peuvent être par exemple des symboles colorés, ou du texte coloré.

Le document US 2006/007098 A1 décrit un afficheur séquentiel couleur à cristaux liquides, conçu afin de pouvoir juxtaposer l'affichage d'une région monochrome et d'une région couleur.

### RESUME DE L'INVENTION

L'invention a pour but d'améliorer les performances de l'afficheur en termes de luminosité ou respect des couleurs, en permettant d'augmenter dans certains cas le temps réservé à l'écriture de l'information dans les lignes de pixels, et/ou le temps réservé à la stabilisation de l'orientation des cristaux liquides après l'écriture, et/ou le temps d'allumage de la source de lumière colorée, tout en restant dans le temps de trame imposé (et dans le nombre de sous-trames choisi pour le mode séquentiel couleur).

Pour y parvenir l'invention propose un afficheur à cristaux liquides comportant des moyens d'adressage de ligne de pixels différents de ceux qui sont utilisés dans l'art antérieur, ces moyens permettant une écriture plus rapide d'une information à afficher lorsque cette information n'occupe pas toute la hauteur de l'afficheur, de sorte qu'on peut réserver plus de temps pour d'autres phases de l'affichage. L'invention propose d'autre part un nouveau procédé d'affichage d'image en séquentiel couleur avec une boîte à lumière comportant au moins deux sources de couleurs différentes, lorsque l'image comporte à la fois une information à afficher dans une première de ces couleurs et un fond à afficher qui ne comporte pas de composante dans la première couleur.

Selon l'invention on propose donc un afficheur à cristaux liquides matriciel comportant au moins N lignes et P colonnes ; l'afficheur comporte une mémoire d'image contenant les données de luminance des pixels pour l'ensemble de l'image à afficher, parmi lesquelles des données pour chacune de M lignes contenant une information d'image non nulle, M inférieur ou égal à N, et un processeur graphique apte à extraire de la mémoire les adresses des M lignes, et pour chacune d'elles P niveaux de luminance à appliquer par P conducteurs de colonne aux P pixels de la ligne, avec une durée périodique T_{L} pour l'écriture d'une ligne ; l'afficheur comporte encore un étage haute tension ayant N entrées et ayant N sorties connectées respectivement chacune à un conducteur de ligne respectif commun aux pixels d'une même ligne de la matrice pour permettre la sélection d'une ligne de pixels en vue de l'écriture de données de luminance dans cette ligne. L'afficheur est caractérisé en ce qu'il comporte :
- N circuits d'échantillonnage et conversion ayant au moins une entrée commune de signal à échantillonner, cette entrée recevant du processeur graphique, pour l'écriture d'une ligne parmi les M, un motif de N mots binaires successifs au cours d'une durée T_{L}, dans lequel le mot binaire de rang i dans la succession a une première valeur si la ligne de rang i doit être écrite et une autre valeur dans le cas contraire, les mots binaires se succédant à une fréquence F_{H} égale à au moins N/T_{L} ; les circuits d'échantillonnage et conversion ont des entrées de commande d'échantillonnage distinctes les unes des autres, la sortie d'un circuit d'échantillonnage et conversion de rang quelconque i étant reliée à une entrée correspondante de rang i de l'étage haute tension et fournissant sur cette entrée une tension qui est fonction du mot binaire reçu,
- un circuit de commande d'échantillonnage actionné à la fréquence F_{H} en synchronisme avec la succession de mots binaires de rang i = 1 à N reçus sur l'entrée commune de signal des circuits d'échantillonnage et conversion, le circuit de commande d'échantillonnage appliquant successivement un ordre d'échantillonnage à chacune des N entrées de commande d'échantillonnage des circuits d'échantillonnage et conversion, de manière à échantillonner et bloquer dans le circuit d'échantillonnage et conversion de rang i le mot binaire de rang i de la succession de N mots binaires,
- une entrée de commande de l'étage haute tension pour appliquer aux N conducteurs de ligne des tensions en correspondance avec les tensions présentes sur les sorties des circuits d'échantillonnage et conversion à la fin de la réception de la succession de N mots binaires, et pour maintenir ces tensions pendant une durée nécessaire à l'écriture d'une ligne.

Les mots binaires sont de simples bits 0 ou 1 si on a besoin seulement de deux tensions VGon (pour l'écriture) et VGoff (pour une absence d'écriture) sur les lignes de pixels.

Par conséquent, l'adressage des lignes pour l'écriture utilise dans cet afficheur un principe autre que le principe classique d'un simple registre à décalage qui adresse successivement et systématiquement chacune des lignes de 1 à N même si elles ne comportent pas d'information de luminance utile. Ce principe réduit le temps nécessaire à l'affichage d'une trame d'image lorsque l'information utile à afficher se présente sur un nombre de lignes M significativement inférieur à N (par exemple M<N/2 ou moins) car la durée nécessaire pour l'écriture se réduit à MxT_{L} au lieu de NxT_{L}. Ce principe n'empêche cependant pas l'affichage d'information utilisant la totalité des N lignes pour les trames où ce serait nécessaire.

Le temps gagné sur l'écriture des lignes peut être réparti soit sous forme d'un temps d'écriture plus long pour chaque ligne, soit sous forme d'un temps de stabilisation du cristal liquide plus important si c'est nécessaire, soit enfin sous forme d'un temps d'allumage plus important de la source de lumière de la première couleur, ce qui renforce la visibilité de l'information affichée.

Les circuits d'échantillonnage et conversion sont de préférence des circuits d'échantillonnage et conversion doubles assurant l'échantillonnage et la conversion d'une succession de N mots binaires pendant une phase d'écriture d'une ligne tout en appliquant aux entrées de l'étage haute tension le résultat de la conversion de la succession de N mots binaires reçue au cours d'une période T_{L} précédente.

Le circuit de commande d'échantillonnage est de préférence un registre à décalage actionné à la fréquence F_{H} en synchronisme avec la succession de mots binaires de rang i = 1 à N reçus sur l'entrée commune de signal des circuits d'échantillonnage et conversion, le registre ayant N sorties de rang i = 1 à N reliées aux entrées de commande d'échantillonnage, et le registre appliquant sur une seule de ses sorties et successivement sur les sorties de rang i = 1 à N un bit de commande d'échantillonnage pendant que les autres sorties sont inactives.

Pour un afficheur séquentiel couleur et pour l'affichage d'une image comportant une information d'une première composante de couleur d'illumination et d'un fond ne comportant pas la première couleur, on peut prévoir que l'afficheur comporte :
- pour l'affichage du fond, des moyens (classiques) pour appliquer successivement ligne par ligne les niveaux de luminance aux P colonnes de pixels en commençant par la première ligne de rang 1 de la matrice et en terminant par la N^{ième} ligne de rang N pour la ou les sous-trames ne correspondant pas à la première couleur, et
- pour l'affichage de l'information dans une sous-trame de la première couleur, des moyens pour extraire de la mémoire d'image uniquement les données correspondant à M lignes contenant une information à afficher dans la première couleur et des moyens pour sélectionner, pour l'écriture de la sous-trame de la première couleur, uniquement les M lignes concernées, ligne par ligne et plusieurs lignes simultanément lorsque les niveaux de luminance sont identiques pour plusieurs lignes suivant les mêmes colonnes.

Outre l'afficheur dont la structure vient d'être résumée, l'invention concerne un procédé d'affichage en mode séquentiel couleur particulièrement adapté à l'affichage d'une information de couleur superposée à un fond de couleur différente.

Plus précisément, on propose un procédé d'affichage d'image sur un afficheur à cristaux liquides selon la revendication de méthode 8.

Pour l'affichage du fond et éventuellement des composantes de couleur de l'information autres que la première couleur, on peut procéder de la même manière ou au contraire utiliser pour le fond un affichage classique dans lequel on applique successivement ligne par ligne les niveaux de luminance aux P colonnes de pixels en commençant par la première ligne de rang 1 de la matrice et en terminant par la N^{ième} ligne de rang N pendant la ou les sous-trames ne correspondant pas à la première couleur.

D'autres caractéristiques et avantages de l'invention apparaîtront à la lecture de la description détaillée qui suit et qui est faite en référence aux dessins annexés dans lesquels :
- la figure 1 représente la structure générale des circuits de commande d'affichage de l'afficheur selon l'invention ;
- la figure 2 représente une variante de réalisation avec un registre à décalage ayant N/2 sorties et une application de deux signaux sur des entrées communes de deux groupes d'échantillonneurs-bloqueurs.

### DESCRIPTION DETAILLEE

L'invention sera décrite en détail à propos d'un afficheur séquentiel couleur. Pour un afficheur à mosaïque de pixels colorés, il n'y a pas de sous-trames correspondant à différentes couleurs et l'invention s'applique à l'affichage de l'ensemble de l'image dans une trame, l'illumination étant faite par une lumière blanche.

Dans l'art antérieur, on écrit les lignes de pixels à cristaux liquides d'une matrice de N lignes et P colonnes successivement de la première ligne à la N^{ième} ligne pour chacune des sous-trames correspondant à une couleur d'illumination. Pour cela, un registre à décalage de N cases transporte un niveau logique haut de la première case à la N^{ième} case à une fréquence F_{L} dite fréquence de ligne. La période de ligne T_{L} = 1/F_{L} est la durée nécessaire pour l'écriture complète d'une ligne de la matrice. Chaque case du registre correspond à une ligne de pixels. Les N sorties parallèles du registre à décalage commandent l'application d'une tension VGoff ou une tension VGon aux conducteurs de ligne de la matrice (un conducteur de ligne par ligne de pixels, commun à tous les pixels de cette ligne). Seul le conducteur de ligne correspondant à la sortie de registre qui est à l'état haut reçoit une tension active VGon qui permet l'écriture des pixels de la ligne. Les autres reçoivent (en général mais pas toujours) une tension inactive VGoff qui ne permet pas l'écriture des pixels de ces lignes mais qui permet le maintien du niveau de luminance pendant le reste de la sous-trame. En pratique, chaque pixel comporte un transistor de commande et la grille du transistor est reliée au conducteur de ligne commun. Les transistors de cette ligne sont rendus conducteurs par la tension VGon. Les transistors des autres lignes restent bloqués. Le drain du transistor est relié à un conducteur de colonne qui, pour l'écriture d'un niveau de luminance dans le pixel situé au croisement de la ligne avec un conducteur de colonne, reçoit du conducteur de colonne une tension analogique représentant ce niveau.

Les lignes de pixels sont donc activées successivement, de la ligne de rang 1 à la ligne de rang N à la fréquence F_{L}. L'écriture de la sous-trame dure NxT_{L}. L'allumage de la source de lumière correspondant à la sous-trame est effectué après la fin de l'écriture.

Dans la présente invention, on cherche par exemple à afficher une image comprenant la superposition d'une image de fond et d'une information particulière, notamment une information critique, une alerte, etc. L'information est affichée dans une première couleur particulièrement visible. Le fond est affiché dans une ou plusieurs autres couleurs. On décrira l'invention principalement à propos d'un affichage mixte d'une information et d'un fond, mais l'invention s'applique de manière générale à l'affichage d'une information même sur un fond noir. Elle est plus particulièrement intéressante lorsque l'information à afficher sur la matrice de N lignes occupe un nombre de lignes significativement plus faible que le nombre N, par exemple moins de la moitié, alors que le fond (une image vidéo de paysage par exemple) peut occuper la totalité des N lignes.

Dans l'exemple le plus simple, l'afficheur séquentiel couleur ne comporte que deux sources de lumière, par exemple une source verte pour le fond, et une source rouge pour l'information.

Dans un autre exemple à trois couleurs, l'afficheur séquentiel comporte trois sources de couleur, une première couleur (rouge par exemple) dédiée à l'information, deux autres couleurs (bleu et vert, mais pas de rouge) pour le fond.

Cependant, l'invention est applicable plus généralement même si l'information à afficher utilise non seulement la première couleur mais peut-être d'autres couleurs. On peut en effet prévoir de mélanger des couleurs pour afficher une information particulière. Par exemple, on peut vouloir afficher une information d'alerte en jaune et une information indiquant un danger en rouge. Pour l'information d'alerte, on utilise alors deux couleurs, une couleur du fond, le vert et la "première couleur" dédiée à l'information, le rouge, qui en se superposant suivant le principe du séquentiel couleur vont former l'information en jaune.

Plus généralement, la première couleur utilisée pour l'affichage d'information peut se mélanger à la ou les couleurs utilisées pour le fond Un principe reste que le fond ne comporte pas de composante dans cette "première couleur".

Pour l'affichage de la couleur de fond et pour l'affichage éventuel de composantes de couleur de l'information qui sont communes avec le fond, on pourra (mais pas obligatoirement) procéder comme dans l'art antérieur avec un registre à décalage (non représenté) qui balaye successivement toutes les lignes de 1 à N à la fréquence de ligne.

Mais pour l'affichage de la composante de couleur non commune avec le fond, on procédera différemment, comme on va l'expliquer maintenant en détail.

Pour simplifier les explications, on considérera maintenant que la composante de couleur de l'information est le rouge d'une source de lumière rouge, et la couleur du fond est le vert d'une source de lumière verte.

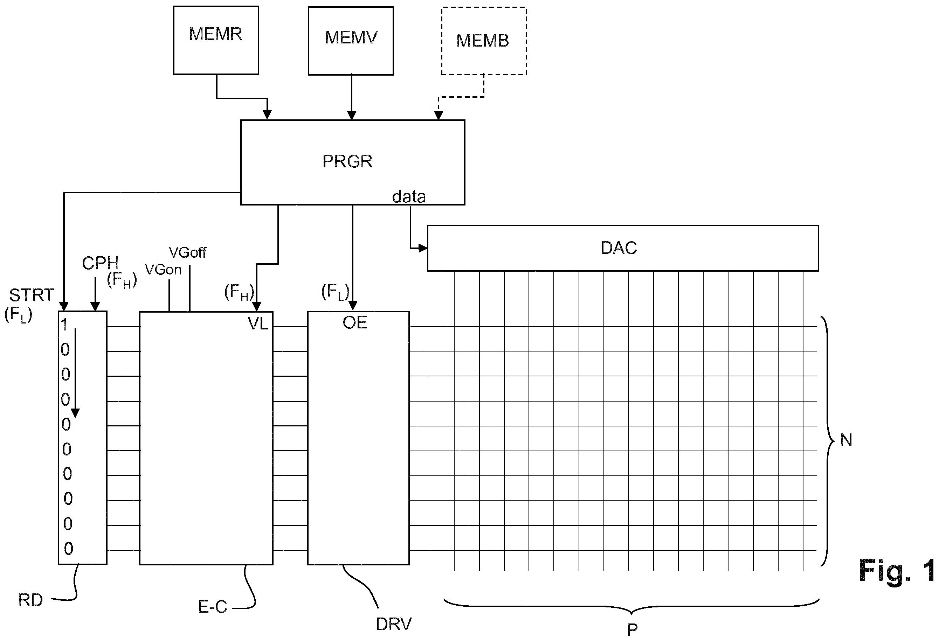

La figure 1 représente un schéma synoptique des blocs essentiels permettant la mise en oeuvre de l'invention. La matrice de N lignes et P colonnes de pixels est représentée symboliquement par un réseau de N conducteurs de ligne horizontaux et P conducteurs de colonne verticaux. Les pixels sont aux croisements des conducteurs de ligne et d'un conducteur de colonne. Les données de luminance de chaque pixel de l'image sont amenées sur les conducteurs de colonne communs à chaque colonne de pixels. La sélection d'une ligne de pixels en cours d'écriture est faite par un conducteur de ligne respectif.

De manière générale, dans cette description, les conducteurs de ligne sont les conducteurs commandant la mise en conduction de transistors, les conducteurs de colonne sont les conducteurs qui amènent à ces transistors des tensions analogiques représentant la luminance à afficher.

Les images à afficher, fond et information à superposer, sont placées dans une mémoire d'image qui contient sous forme numérique les données de luminance de chaque pixel, pour chaque composante de couleur. La mémoire peut être subdivisée en mémoires partielles correspondant à chaque sous-trame à afficher, donc à chaque composante de couleur. Il y a par exemple une mémoire MEMV pour l'image de fond à afficher en vert et une mémoire MEMR pour l'information (texte ou symboles d'alerte) à afficher en superposition avec le fond. On a représenté en pointillés une mémoire additionnelle MEMB qui contiendrait une composante d'image bleue par exemple dans le cas où l'image de fond aurait une composante verte et une composante bleue.

Un processeur graphique PRGR sert à extraire, sous-trame par sous-trame et ligne par ligne à l'intérieur d'une sous-trame, les données de luminance contenues dans la mémoire. Les données de luminance d'une ligne peuvent arriver en série ou en parallèle dans un convertisseur numérique-analogique DAC qui transforme chaque donnée de luminance en une tension analogique qui sera appliquée au pixel lorsque la ligne contenant ce pixel sera sélectionnée. Dans ce qui suit on parlera de période de ligne T_{L} pour indiquer la durée totale réservée pour l'écriture des données de luminance d'une ligne de pixels, et de fréquence de ligne F_{L} = 1/T_{L} pour indiquer la cadence d'écriture des différentes lignes dans une sous-trame. Cette fréquence et cette période sont en principe les mêmes que celles qui sont appliquées pour l'écriture de N lignes successives dans les couleurs de fond.

La sélection d'une ligne de pixels se fait par application d'une tension appropriée sur le conducteur de ligne. Dans le cas le plus simple, la tension appliquée est une tension VGon. Les conducteurs des lignes non sélectionnées reçoivent une tension VGoff. On peut envisager des situations plus complexes où le niveau de tension sur une ou plusieurs lignes adjacentes à la ligne d'écriture n'est ni la tension VGon ni la tension VGoff. On reviendra plus loin sur ce point car l'invention s'applique aussi dans ce dernier cas ; pour simplifier, on considérera d'abord le cas simple de deux tensions : une tension active VGon et une tension inactive VGoff. Ces tensions sont appliquées sur la grille du transistor de commande de chaque pixel, pour tous les pixels d'une ligne. Les tensions VGon et VGoff sont typiquement d'environ +25 volts et -7 volts.

Les tensions VGon et VGoff sont élaborées, pour chacune des N lignes de la matrice, dans chacun de N circuits d'échantillonnage et conversion ; ces tensions sont appliquées ensuite aux N lignes de la matrice par l'intermédiaire d'un étage haute tension DRV. L'étage haute tension DRV comporte une série de N amplificateurs..

Le circuit de commande permettant l'écriture de l'information de couleur rouge pendant une sous-trame rouge comprend un ensemble d'échantillonnage et conversion numérique-analogique E-C comprenant N circuits d'échantillonnage et conversion. La sortie du circuit d'échantillonnage et conversion de rang i dans l'ensemble E-C applique une tension VGon ou VGoff à l'entrée de rang i de l'étage haute tension DRV ; la sortie de rang i de ce dernier applique une tension VGon ou VGoff à la ligne de pixels de rang i. La fonction du circuit d'échantillonnage et conversion et de rang i est de prendre à un instant donné, défini par un ordre d'échantillonnage, la valeur logique d'une entrée de signal à échantillonner, et de convertir cette valeur en une tension VGon si c'est une première valeur ou VGoff si c'est une autre valeur ; la tension convertie sera appliquée par la sortie de rang i de l'étage haute tension à la ligne de rang i pendant la durée réservée à l'écriture d'une ligne.

Pour assurer la commande d'échantillonnage de l'ensemble E-C, le circuit de commande d'écriture comprend un circuit de commande d'échantillonnage à N sorties ; les sorties sont reliées aux entrées de commande d'échantillonnage (distinctes les unes des autres) des circuits d'échantillonnage et conversion de l'ensemble E-C ; elles permettent de commander successivement un échantillonnage par chacun des N circuits d'échantillonnage ; le circuit de commande d'échantillonnage est en pratique un registre à décalage RD à N sorties.

Les N circuits d'échantillonnage et conversion ont une entrée commune VL de signal à échantillonner, cette entrée recevant du processeur graphique à une fréquence F_{H} égale à au moins N/T_{L} un motif de N bits successifs pour l'écriture d'une ligne pendant une période T_{L} ; dans cette succession, le bit de rang i a une valeur 0 ou 1 selon que la ligne de rang i doit ou non être écrite pendant une période déterminée de durée T_{L}. La cadence d'arrivée des bits de la succession est la même (F_{H}) que la cadence d'arrivée des ordres d'échantillonnage reçus par les différents circuits d'échantillonnage et conversion, de manière à échantillonner et bloquer dans le circuit d'échantillonnage et conversion de rang i le bit de rang i de la succession reçue sur l'entrée commune VL.

On verra plus loin que l'entrée commune VL des circuits d'échantillonnage et conversion peut recevoir non pas un bit indiquant le rang d'une ligne à écrire mais un mot binaire de deux bits en parallèle (voire plus) lorsqu'on veut pouvoir appliquer non seulement une tension VGon et une tension VGoff mais aussi une ou plusieurs tensions intermédiaires VGint1, VGint2 ; c'est le cas par exemple lorsqu'on écrit dans une ligne de rang i, à laquelle on applique donc VGon, tout en souhaitant appliquer provisoirement une tension intermédiaire à la ligne adjacente de rang i+1 dans laquelle on ne souhaite pas écrire. Cette tension intermédiaire peut permettre de compenser des couplages parasites entre la ligne en cours d'écriture et ses voisines.

Le registre à décalage RD qui constitue le circuit de commande d'échantillonnage comporte une entrée série STRT qui reçoit d'abord un bit de niveau logique 1 puis uniquement des bits 0. Il possède N sorties parallèles, et il possède une entrée d'actionnement recevant un signal d'horloge CPH à la fréquence F_{H} au moins N fois supérieure à la fréquence de ligne F_{L}. Il établit donc à la première période d'horloge un niveau 1 sur la première sortie les autres étant à zéro, à la i^{ième} période d'horloge un niveau 1 sur la i^{ème} sortie, les autres étant à zéro, et ainsi de suite. Le cycle de décalage initié par le signal STRT recommence à chaque nouvelle période de ligne. C'est donc le signal STRT qui fonctionne à la fréquence de ligne, alors que le décalage fonctionne à la fréquence F_{H}.

Le décalage du registre à la fréquence F_{H} est effectué en synchronisme avec la succession de bits (ou mots de plusieurs bits en parallèle) de rang i = 1 à N reçus sur l'entrée commune VL de signal des circuits d'échantillonnage et conversion ; le registre applique successivement un ordre d'échantillonnage à chacune des N entrées de commande d'échantillonnage des circuits d'échantillonnage et conversion. La i^{ème} sortie du registre déclenche, lorsqu'elle passe à 1, une opération d'échantillonnage par le i^{ème} circuit d'échantillonnage, et la valeur échantillonnée est celle du i^{ème} bit ou mot binaire de la succession reçue sur l'entrée VL. Chaque valeur échantillonnée et convertie est bloquée pendant le reste de l'opération d'échantillonnage. L'échantillonnage d'un motif de N valeurs logiques peut avoir lieu pendant une période de ligne et l'utilisation du motif échantillonné pendant la période de ligne suivante.

L'étage haute tension DRV comporte une entrée de commande OE actionnée à la fréquence de ligne F_{L} (F_{L} = 1/T_{L}) pour appliquer aux N conducteurs de ligne, à la fin de la succession de N opérations d'échantillonnage, un motif de tensions VGon et VGoff en correspondance avec le motif de la succession de N mots binaires qui a été reçue. L'étage haute tension maintient alors ces tensions pendant une durée nécessaire à l'écriture d'une ligne. L'entrée de commande OE peut recevoir un signal de commande du processeur graphique PRGR, à la fréquence ligne F_{L}. Il peut aussi recevoir un dernier bit du registre à décalage RD, indiquant la fin d'un cycle de N décalages successifs du registre.

Pour sélectionner une seule ligne de rang i, ce qui sera le cas le plus fréquent, en vue de l'écriture de données de luminance dans les pixels de cette ligne, on appliquera à l'entrée de signal commune VL de la série de circuits d'échantillonnage et conversion une série de i-1 bits 0 puis un bit 1 à la i^{ème} période de l'horloge CPH sur la ligne de rang i, et enfin une série de Ni+1 bits 0 aux périodes suivantes. Cette opération de chargement dure le temps de N coups d'horloge à fréquence F_{H}, donc elle s'accomplit au maximum dans la durée d'une période de ligne. Simultanément à l'application du premier bit du motif, on appliquera le bit 1 unique sur la sortie de rang 1 du registre RD ; on décalera ensuite le 1 de la première sortie à la sortie suivante puis aux autres, en synchronisme avec la succession de bits appliqués. Les bits 0 de l'entrée VL sont échantillonnés et convertis en tension VGoff dans les i-1 premiers circuits d'échantillonnage et conversion au fur et à mesure que le 1 du registre se décale de la sortie de rang 1 à la sortie de rang i-1. Le bit 1 sur l'entrée VL se présente à la i^{ème} période et est échantillonné et converti dans le i^{ème} circuit d'échantillonnage et conversion parce que le niveau 1 du registre RD se présente alors sur la i^{ième} sortie du registre.

A la fin des N périodes à fréquence F_{H}, la série de sorties de circuits d'échantillonnage et conversion contient un motif de tensions VGoff avec une tension VGon sur une ligne de rang i. Ce motif représente le motif d'adressage des lignes pour l'écriture d'une ligne déterminée.

Dans le cas où l'information est telle que plusieurs lignes doivent recevoir exactement les mêmes données de luminance, on peut très bien inscrire dans l'ensemble d'échantillonnage et conversion un motif de plusieurs tensions VGon pendant un seul cycle de décalages. C'est le cas par exemple si on veut écrire un ou plusieurs rectangles rouges de hauteur égale à r lignes, de la ligne i à la ligne i+r-1 et rien sur les autres lignes. Dans ce cas on charge des 1 successifs à l'entrée de l'ensemble d'échantillonnage et conversion, du rang i au rang i+r-1, en un seul cycle de durée NxF_{H}. Les r lignes seront écrites simultanément par l'application sur les colonnes des niveaux de luminance rouge issus de la mémoire MEMR pendant une seule période de ligne T_{L}. Cette écriture simultanée peut concerner des lignes qui ne sont pas adjacentes.

C'est le processeur graphique qui détermine, à partir de la mémoire d'image MEMR quelles sont les M lignes qui comportent une information de luminance différente de zéro dans au moins un pixel. Ces lignes et ces lignes seulement sont extraites de la mémoire MEMR. C'est aussi le processeur qui détermine quelles sont les lignes qui comportent exactement les mêmes données de luminance et qui commande alors leur écriture simultanée.

Le processeur fournit alors sur l'entrée VL, pour l'écriture d'une seule ligne d'information de rang i, un motif binaire en série, à la cadence F_{H}, avec i-1 zéros successifs à des périodes de rang 1 à i-1, puis un 1 à la période de rang i, et à nouveau N-i+1 niveaux zéros successifs aux périodes de rang i+1 à N. En synchronisme avec cette fourniture, le registre à décalage RD commande l'échantillonnage de ces zéros dans les échantillonneurs de rangs 1 à i-1, l'échantillonnage du 1 dans l'échantillonneur de rang i, et à nouveau l'échantillonnage de zéros dans les échantillonneurs de rang i+1 à N. Si plusieurs lignes sont écrites simultanément avec des informations de luminance identiques pendant une seule durée T_{L}, le processeur graphique fournit pour cette période un motif binaire en série avec autant de 1 qu'il y a de lignes à écrire simultanément, aux périodes de la fréquence F_{H} qui correspondent à ces lignes.

Après chaque motif, l'étage haute tension DRV reçoit sur son entrée OE un ordre d'établissement de hautes tensions, fourni par le processeur graphique, et l'écriture d'une ligne sélectionnée est alors effectuée : le processeur graphique fournit les données de luminance associées à cette ligne. Le signal OE est émis à la fréquence ligne FL.

La durée totale d'écriture de la sous-trame est donc MxT_{L} et non NxT_{L} comme ce serait le cas dans l'art antérieur. Cette durée est donc d'autant plus réduite que l'information à afficher nécessite moins de lignes. Si plusieurs lignes sont écrites simultanément, le temps d'écriture est encore réduit puisque le processeur ne charge qu'une fois les données de luminance à écrire pour ce groupe de plusieurs lignes.

Le temps gagné pour l'écriture de la trame peut être utilisé de plusieurs manières et notamment pour allumer plus longtemps (sans modifier le temps global réservé à la sous-trame rouge) la source de lumière rouge pour améliorer la visibilité de l'information. Il peut être utilisé aussi pour augmenter le temps réservé à la stabilisation du cristal liquide après l'écriture de la sous-trame rouge et avant l'allumage de la lumière rouge, pour mieux assurer l'affichage de l'image d'information désirée.

Alternativement ou complémentairement, si on sait à l'avance qu'il y a un nombre maximal Zmax de lignes d'information d'alerte à afficher, on peut décider à l'avance que la sous-trame rouge a une durée plus réduite que les autres sous-trames, pour améliorer le fonctionnement des autres sous-trames qui doivent afficher N lignes et doivent donc travailler très rapidement.

Le registre à décalage RD peut être bidirectionnel si on veut écrire la matrice alternativement de bas en haut puis de haut en bas ; il comporte alors une entrée de sélection de direction de décalage pour effectuer un décalage alternativement dans un sens puis dans l'autre.

Ce principe de fonctionnement dans lequel le processeur graphique ne gère qu'un nombre limité de lignes comportant de l'information à afficher est tout-à-fait compatible avec la possibilité d'avoir un étage haute tension DRV qui utilise plus de deux niveaux de tension de ligne : VGoff, VGon, et des niveaux intermédiaires VGint1, VGint2, etc. Un cas qu'on peut donner à titre d'exemple est le suivant : la tension VGon est appliquée à la ligne de rang i qu'on veut écrire, la tension VGoff est appliquée à presque toutes les autres lignes, une tension intermédiaire Vint1 est appliquée à une ligne adjacente de rang i+1, une tension intermédiaire Vint2 est appliquée à une ligne adjacente de rang i-1 ou une ligne adjacente de rang i+2.

Dans ce cas, au lieu d'appliquer sur l'entrée VL un simple bit indiquant si on veut écrire la ligne (bit = 1) ou si on ne veut pas l'écrire (bit = 0), on applique à l'entrée VL un mot binaire de deux bits (en principe en parallèle sur deux conducteurs d'entrée) qui définit si on veut appliquer la tension VGoff (mot 00) ou VGint1 (mot 01) ou VGint2 (mot 10) ou VGon (mot 11).

Au moment de l'échantillonnage d'un mot binaire de rang i, le circuit d'échantillonnage et conversion produit la tension correspondante sur sa sortie et c'est cette tension qui sera appliquée par l'étage haute tension lors de la réception du signal OE à la fin de la série de N échantillonnages.

Le principe de l'invention est également compatible avec la possibilité de remettre à zéro (en niveau "blanc" ou en niveau "noir") la totalité de l'écran entre chaque sous-trame colorée. L'écran peut en effet être remis totalement à zéro au niveau noir entre chaque sous-trame colorée par le processeur graphique qui, dans le temps d'une seule période de ligne T_{L}, peut charger dans les échantillonneurs-bloqueurs un niveau 1 sur toutes les lignes à la fois et appliquer ensuite le niveau noir sur toutes les colonnes à la fois. L'inverse (niveau blanc) peut être fait exactement de la même manière.

On peut également faire cette réinitialisation au niveau noir ou blanc pour une zone spécifique de l'écran.

Ce qui a été dit précédemment sur la distinction entre la couleur de l'information et la couleur du fond, doit être interprété dans le sens où le fond pourrait être systématiquement noir et naturellement noir (cas des écrans LCD "normally black" ou OLED) et des informations pourraient être fournies dans plusieurs couleurs et sur un nombre de lignes limité pour chaque couleur.

Dans ce cas, le principe de l'invention peut être appliqué indépendamment pour chaque couleur ne comportant que des informations sur des nombres de lignes limités, par exemple un nombre de lignes Mr pour le rouge et un nombre Mv pour le vert, etc.

Dans le cas où on voudrait afficher le fond de couleur verte par un registre à décalage classique à N sorties actionné à la fréquence de ligne F_{L} et dont les sorties commandent directement les entrées de l'étage DRV, on comprendra qu'il faut prévoir un circuit d'aiguillage, non représenté pour ne pas alourdir la figure, pour aiguiller vers les N entrées de l'étage haute tension soit les sorties du registre à décalage traditionnel (pendant la sous-trame verte) soit les sorties du circuit de commande selon l'invention (pendant la sous-trame rouge).

Les données de luminance fournies sous forme numérique par le processeur graphique PRGR sont converties par le convertisseur DAC en tensions analogiques appliquées aux P colonnes de l'afficheur. Classiquement, le convertisseur DAC peut fonctionner en série, c'est-à-dire convertir successivement chaque donnée de luminance arrivant du processeur graphique, avec un échantillonnage-blocage du résultat dans les colonnes successives en synchronisme avec l'arrivée des P données numériques, et une application simultanée des tensions échantillonnées aux colonnes à la fin de la série d'échantillonnages pour une écriture d'une ligne.

Dans ce cas, la fréquence de cette conversion peut être une fréquence F'_{H} répondant à la condition F'_{H} au moins égal à P/T_{L} pour que l'afficheur ait le temps de produire les P tensions analogiques dans la durée réservée à l'écriture d'une ligne.

Si N et P sont de même ordre de grandeur, la même fréquence F_{H} issue d'une horloge CPH, et au moins égale à N/T_{L} et à PT_{L}, peut être utilisée pour l'adressage des lignes et pour la conversion successive des données de luminance.

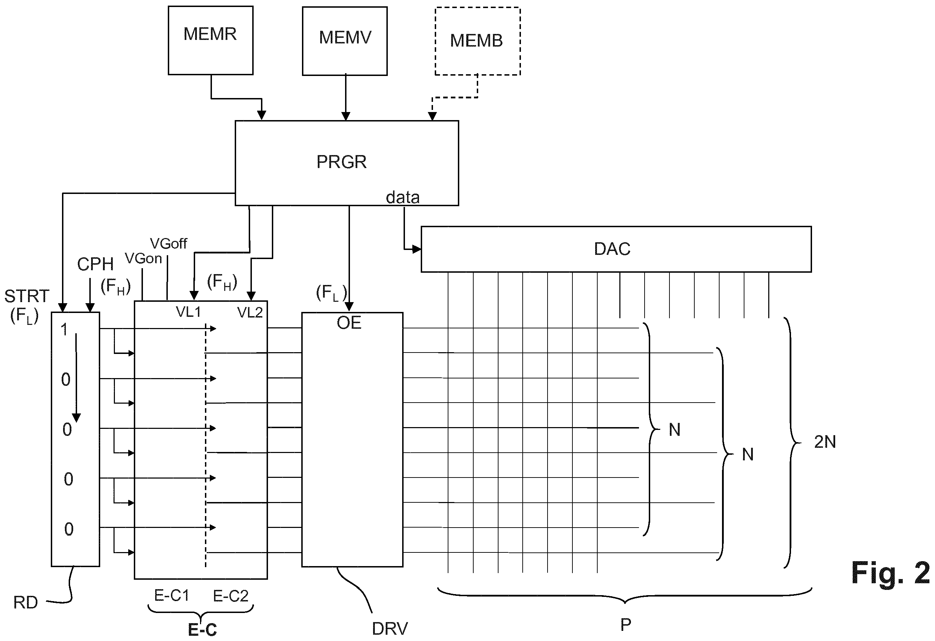

La figure 2 représente une variante de réalisation de l'invention dans laquelle le circuit de commande d'échantillonnage qui commande N échantillonnages successifs comporte un registre à décalage ayant un nombre de sorties qui est inférieur au nombre total de lignes de la matrice mais qui est une fraction de ce nombre, dans le but d'accélérer le chargement d'un motif de bits dans l'étage haute tension ou inversement dans le but d'utiliser une fréquence F_{H} plus faible que celle qui serait théoriquement nécessaire.

Dans ce cas, on considère que l'ensemble d'échantillonnage et conversion E-C est subdivisé en k sous-ensembles de rang j = 1 à k, dont les sorties sont reliées à k groupes de N lignes respectives. Chaque sous-ensemble de rang j = 1 à k a une entrée commune VLj et échantillonne uniquement les bits (ou mots binaires) qui se présentent sur son entrée. Les N circuits d'échantillonnage et conversion d'un même sous-ensemble reçoivent successivement, à la fréquence F_{H}, leur ordre d'échantillonnage. L'ordre d'échantillonnage est donné simultanément pour les k circuits d'échantillonnage de même rang i = 1 à N.

Le processeur graphique gère l'envoi des k successions de bits ou mots binaires correspondant à k motifs simultanés d'adressage des lignes en tenant compte du fait que l'ordre d'échantillonnage sera simultané pour k circuits d'échantillonnage à la fois.

La figure 2 représente le cas où k=2. Il y a deux groupes de N lignes. Chacune des N sorties du registre définit une commande d'échantillonnage qui s'applique simultanément à deux circuits d'échantillonnage et conversion faisant partie respectivement d'un sous-ensemble E-C1 et d'un sous-ensemble E-C2 ; ces deux circuits correspondent à deux lignes différentes. Les deux circuits d'échantillonnage et conversion qui reçoivent la même commande d'échantillonnage peuvent être disposés côte à côte ou au contraire être disposés dans deux groupes différents de N circuits d'échantillonnage et conversion juxtaposés. Dans un cas les groupes de N lignes sont imbriqués l'un dans l'autre (comme représenté sur la figure 2). Dans l'autre cas ils sont juxtaposés.

## Revendications

1. Afficheur à cristaux liquides matriciel comportant au moins N lignes et P colonnes, et comportant une mémoire d'image (MEMR) contenant les données de luminance des pixels reçues pour une image à afficher, parmi lesquelles des données pour chacune de M lignes contenant une information d'image non nulle, M inférieur ou égal à N, et un processeur graphique (PRGR) apte à extraire de la mémoire les adresses des M lignes, et pour chacune d'elles P niveaux de luminance à appliquer par P conducteurs de colonne aux P pixels de la ligne, avec une durée périodique T_{L} pour l'écriture d'une ligne, et un étage haute tension (DRV) ayant N entrées et ayant N sorties connectées respectivement chacune à un conducteur de ligne respectif commun aux pixels d'une même ligne de la matrice pour permettre la sélection d'une ligne de pixels en vue de l'écriture de données de luminance dans cette ligne, afficheur **caractérisé en ce qu'**il comporte :
- N circuits d'échantillonnage et conversion (E-C) ayant au moins une entrée commune (VL) de signal à échantillonner, cette entrée recevant du processeur graphique, un motif de N mots binaires successifs au cours d'une durée T_{L}, dans lequel les mots binaires se succèdent à une fréquence F_{H} égale à au moins N/T_{L}, pour l'écriture d'une ligne parmi les M, et dans lequel le mot binaire de rang i dans la succession a une première valeur si la ligne de rang i doit être écrite et une autre valeur dans le cas contraire, les circuits d'échantillonnage et conversion ayant des entrées de commande d'échantillonnage distinctes les unes des autres, la sortie d'un circuit d'échantillonnage et conversion de rang quelconque i étant reliée à une entrée correspondante de rang i de l'étage haute tension et fournissant sur cette entrée une tension (VGon, VGoff) qui est fonction du mot binaire reçu,
- un circuit (RD) de commande d'échantillonnage actionné à la fréquence F_{H} en synchronisme avec la succession de mots binaires de rang i = 1 à N reçus sur l'entrée commune de signal des circuits d'échantillonnage et conversion, le circuit de commande d'échantillonnage appliquant successivement un ordre d'échantillonnage à chacune des N entrées de commande d'échantillonnage des circuits d'échantillonnage et conversion, de manière à échantillonner et convertir dans le circuit d'échantillonnage et conversion de rang i le mot binaire de rang i de la succession de N mots binaires,
- une entrée de commande (OE) de l'étage haute tension pour appliquer aux N conducteurs de ligne des tensions en correspondance avec les tensions présentes sur les sorties des circuits d'échantillonnage et conversion à la fin de la réception de la succession de N mots binaires, et pour maintenir ces tensions pendant une durée nécessaire à l'écriture d'une ligne.

2. Afficheur à cristaux liquides matriciel selon la revendication 1, **caractérisé en ce que** les circuits d'échantillonnage et conversion (E-C) sont des circuits doubles assurant l'échantillonnage d'une succession de N mots binaires tout en appliquant aux entrées de l'étage haute tension (DRV) le résultat de l'échantillonnage et la conversion de la succession précédemment échantillonnée.

3. Afficheur à cristaux liquides selon l'une des revendications 1 et 2, **caractérisé en ce que** le circuit de commande d'échantillonnage est un registre à décalage (RD) actionné à la fréquence de décalage F_{H} en synchronisme avec la succession de mots binaires de rang i = 1 à N reçus sur l'entrée commune (VL) de signal des circuits d'échantillonnage et conversion, le registre ayant N sorties de rang i = 1 à N reliées aux entrées de commande d'échantillonnage, et le registre appliquant successivement sur une seule de ses sorties de rang i = 1 à N un bit de commande d'échantillonnage pendant que les autres sorties sont inactives.

4. Afficheur à cristaux liquides matriciel selon la revendication 3, **caractérisé en ce que** la matrice contient k groupes de N lignes, l'afficheur comportant kxN circuits d'échantillonnage-blocage (E-C1, E-C2) dont les sorties sont associées par l'intermédiaire de l'étage haute tension (DRV) aux kxN lignes de la matrice, chaque sortie du registre commandant simultanément les entrées de commande d'échantillonnage de k circuits d'échantillonnage et conversion, et le processeur graphique (PRG) appliquant une succession de N groupes de k mots binaires en parallèle, sur k entrées parallèles communes (VL1, VL2) chacune à un groupe de N circuits d'échantillonnage et conversion respectif.

5. Afficheur à cristaux liquides selon l'une des revendications 3 et 4, **caractérisé en ce que** le registre à décalage (RD) est bidirectionnel et comporte une entrée de sélection de direction de décalage pour effectuer un décalage alternativement dans un sens puis dans l'autre pour des sous-trames différentes.

6. Afficheur à cristaux liquides selon l'une des revendications 1 à 5, pour l'affichage d'une image comportant une information d'une première composante de couleur d'illumination et d'un fond ne comportant pas la première couleur, l'afficheur comportant :
- pour l'affichage du fond, des moyens pour appliquer successivement ligne par ligne les niveaux de luminance aux P colonnes de pixels en commençant par la première ligne de rang 1 de la matrice et en terminant par la N^{ième} ligne de rang N pour la ou les sous-trames ne correspondant pas à la première couleur, et
- pour l'affichage de l'information dans une sous-trame de la première couleur, des moyens pour extraire de la mémoire d'image uniquement les données correspondant à M lignes contenant une information à afficher dans la première couleur et des moyens pour sélectionner, pour l'écriture de la sous-trame de la première couleur, uniquement les M lignes concernées, ligne par ligne et plusieurs lignes simultanément lorsque les niveaux de luminance sont identiques pour plusieurs lignes.

7. Afficheur à cristaux liquides selon la revendication 6, dans lequel ladite information est affichée dans une couleur mixte, mélangeant une couleur du fond et ladite première couleur.

8. Procédé d'affichage d'image sur un afficheur à cristaux liquides matriciel de N lignes et P colonnes, de type séquentiel couleur à au moins deux couleurs d'illumination selon la revendication 1, dans lequel l'image à afficher comporte une information comportant une composante d'une première des deux couleurs et un fond ne comportant pas de composante dans la première couleur, le fond et l'information étant fournis par une mémoire d'image contenant les niveaux de luminance des pixels pour l'ensemble de l'image à afficher pour chaque couleur et pour chaque ligne de la matrice et les niveaux étant appliqués pour chaque ligne aux P colonnes de la matrice avant une phase d'illumination avec la couleur correspondant à cette ligne, **caractérisé en ce que** pour l'affichage de l'information dans une sous-trame de la première couleur :
- on extrait de la mémoire d'image uniquement les niveaux de luminance correspondant à M lignes comportant des points de luminance non nulle dans la première couleur, M inférieur à N, et
- on commande l'écriture des M lignes successivement, ligne par ligne, pour appliquer successivement pour chacune de ces M lignes, les niveaux de luminance extraits aux P colonnes de pixels sans appliquer de niveaux de luminance aux P colonnes pendant cette sous-trame pour les autres lignes, où l'écriture de chacune des M lignes pendant une durée T_{L}, se fait en appliquant audit ensemble de N circuits d'échantillonnage et conversion (EC) un signal à échantillonner (VL) qui est commun à tous ces circuits et qui est une série de mots binaires se succédant à une fréquence F_{H} au moins égale à N/T_{L}, où le mot binaire de rang i dans la succession a une première valeur si la ligne de rang i doit être écrite et une autre valeur dans le cas contraire, et en échantillonnant ce signal successivement dans chacun des circuits d'échantillonnage et conversion à la fréquence F_{H} en synchronisme avec la succession de N mots binaires de manière à échantillonner et convertir dans le circuit d'échantillonnage et conversion de rang i le mot de rang i de la succession de N mots binaires, le circuit d'échantillonnage et conversion de rang i commandant l'application d'une tension souhaitée, définie par le mot binaire de rang i, à la ligne de pixels de rang i.

9. Procédé selon la revendication 8, dans lequel pour l'étape d'écriture de chacune des M lignes, en fonction du mot binaire de rang i, le circuit d'échantillonnage et conversion de rang i sélectionne et applique un niveau de tension sur la ligne de rang i, qui est un niveau de sélection (VGoff) si la ligne doit être écrite, et si la ligne ne doit pas être écrite, un niveau de désélection (VGon) ou un niveau intermédiaire parmi un ou des niveaux de tension intermédiaires (VGint1, VGint2).

10. Procédé selon la revendication 8, **caractérisé en ce que**, pour l'affichage du fond et éventuellement des composantes de couleur de l'information autres que la première couleur, on applique successivement ligne par ligne les niveaux de luminance aux P colonnes de pixels en commençant par la première ligne de rang 1 de la matrice et en terminant par la N^{ième} ligne, de rang N, pour la ou les sous-trames ne correspondant pas à la première couleur.

11. Procédé selon l'une des revendications 8 à 10, **caractérisé en ce que** le motif de N mots binaires successifs comporte plusieurs mots ayant la première valeur et les autres mots ayant d'autres valeurs si plusieurs lignes doivent recevoir des niveaux de luminance identiques pour leurs P pixels, ces lignes étant alors écrites toutes simultanément.

12. Procédé selon la revendication 11, dans lequel lesdites plusieurs lignes peuvent être écrites simultanément pour réinitialiser leurs P pixels.

13. Procédé selon l'une des revendications 8 à 11, **caractérisé en ce que** dans le motif de N mots binaires successifs, les N mots ont tous la même valeur si toutes les lignes de la matrice doivent recevoir un niveau de réinitialisation de leurs P pixels, toutes ces lignes étant alors écrites toutes simultanément.

14. Procédé selon l'une des revendications 8 à 13, **caractérisé en ce que** les circuits d'échantillonnage et conversion assurent l'échantillonnage et la conversion d'une succession de N mots binaires pendant une phase d'écriture d'une ligne tout en appliquant aux entrées de l'étage haute tension le résultat de la conversion de la succession de N mots binaires reçue au cours d'une période T_{L} précédente.

## Patentansprüche

1. Matrix-Flüssigkristallanzeige, die Folgendes umfasst: wenigstens N Reihen und P Spalten und einen Bildspeicher (MEMR), der Luminanzdaten von für ein anzuzeigendes Bild empfangenen Pixeln enthält, von denen Daten für jede von M Reihen eine Bildinformation von ungleich null enthalten, wobei M gleich oder kleiner als N ist, und einen Grafikprozessor (PRGR), der die Adressen von M Reihen aus dem Speicher extrahieren kann, und für jede davon P Luminanzpegel, anzulegen durch P Spaltenleiter an die P Pixel der Reihe, mit einer periodischen Dauer T_{L} zum Schreiben einer Reihe, und eine Hochspannungsstufe (DRV) mit N Eingängen und N Ausgängen, die jeweils mit einem jeweiligen Reihenleiter verbunden sind, der den Pixeln einer selben Reihe der Matrix gemeinsam ist, um die Auswahl einer Reihe von Pixeln im Hinblick auf das Schreiben von Luminanzdaten in diese Reihe zuzulassen, wobei die Anzeige **dadurch gekennzeichnet ist, dass** sie Folgendes umfasst:
- N Abtast- und Konvertierungsschaltungen (E-C) mit wenigstens einem gemeinsamen abzutastenden Signaleingang (VL), wobei dieser Eingang vom Grafikprozessor ein Muster von N aufeinander folgenden binären Wörtern im Laufe einer Dauer T_{L} empfängt, in dem die binären Wörter mit einer Frequenz F_{H} gleich oder kleiner als N/T_{L} aufeinander folgen, zum Schreiben einer Reihe unter den M Reihen, und in dem das binäre Wort von Rang i in der Folge einen ersten Wert hat, wenn die Reihe von Rang i geschrieben werden muss, und einen anderen Wert im gegenteiligen Fall, wobei die Abtast- und Konvertierungsschaltungen voneinander separate Abtastbefehlseingänge haben, wobei der Ausgang einer Abtast- und Konvertierungsschaltung eines beliebigen Rangs i mit einem entsprechenden Eingang von Rang i der Hochspannungsstufe verbunden ist und an diesen Eingang eine Spannung (VGon, VGoff) anlegt, die von dem empfangenen binären Wort abhängig ist,
- eine Abtaststeuerschaltung (RD), aktiviert mit der Frequenz F_{H} synchron zu der Folge von binären Wörtern von Rang i = 1 bis N, empfangen am gemeinsamen Signaleingang der Abtast- und Konvertierungsschaltungen, wobei die Abtaststeuerschaltung aufeinanderfolgend eine Abtastreihenfolge an jeden der N Abtaststeuereingänge der Abtast- und Konvertierungsschaltungen anlegt, um das binäre Wort von Rang i der Folge von N binären Wörtern in der Abtast- und Konvertierungsschaltung von Rang i abzutasten und zu konvertieren,
- einen Steuereingang (OE) der Hochspannungsstufe zum Anlegen von Spannungen an die N Reihenleiter, entsprechend den Spannungen, die an den Ausgängen der Abtast- und Konvertierungsschaltungen am Ende des Empfangs der Folge von N binären Wörtern anliegen, und zum Halten dieser Spannungen für eine Dauer, die zum Schreiben einer Reihe notwendig ist.

2. Matrix-Flüssigkristallanzeige nach Anspruch 1, **dadurch gekennzeichnet, dass** die Abtast- und Konvertierungsschaltungen (E-C) Doppelschaltungen sind, die das Abtasten einer Folge von N binären Wörtern unter Anlegen des Ergebnisses der Abtastung und der Konvertierung der zuvor abgetasteten Folge an die Eingänge der Hochspannungsstufe (DRV) gewährleisten.

3. Flüssigkristallanzeige nach einem der Ansprüche 1 und 2, **dadurch gekennzeichnet, dass** die Abtaststeuerschaltung ein Schieberegister (RD) ist, aktiviert mit der Versatzfrequenz F_{H} synchron zu der Folge von binären Wörtern von Rang i = 1 bis N, empfangen am gemeinsamen Signaleingang (VL) der Abtast- und Konvertierungsschaltungen, wobei das Register N Ausgänge von Rang i = 1 bis N hat, verbunden mit den Abtaststeuereingängen, und wobei das Register nacheinander ein Abtaststeuerbit an einen seiner Ausgänge von Rang i = 1 bis N anlegt, während die anderen Ausgänge inaktiv sind.

4. Matrix-Flüssigkristallanzeige nach Anspruch 3, **dadurch gekennzeichnet, dass** die Matrix k Gruppen von N Reihen enthält, wobei die Anzeige kxN Abtastblockierschaltungen (E-C1, E-C2) umfasst, deren Ausgänge mittels der Hochspannungsstufe (DRV) mit den kxN Reihen der Matrix assoziiert sind, wobei jeder Ausgang des Registers gleichzeitig die Abtaststeuereingänge von k Abtast- und Konvertierungsschaltungen steuert und wobei der Grafikprozessor (PRG) eine Folge von N Gruppen von k binären Wörtern parallel an k parallelen Eingängen (VL1, VL2), die jeweils einer jeweiligen Gruppe von N Abtast- und Konvertierungsschaltungen gemeinsam sind, anlegt.

5. Flüssigkristallanzeige nach einem der Ansprüche 3 und 4, **dadurch gekennzeichnet, dass** das Schieberegister (RD) bidirektional ist und einen Versatzrichtungsauswahleingang zum Bewirken eines Versatzes alternativ in einer Richtung, dann in der anderen Richtung, für die unterschiedlichen Subframes umfasst.

6. Flüssigkristallanzeige nach einem der Ansprüche 1 bis 5 zum Anzeigen eines Bildes, das eine Information einer ersten Beleuchtungs- und Hintergrundfarbkomponente umfasst, die die erste Farbe nicht umfasst, wobei die Anzeige Folgendes umfasst:
- zum Anzeigen des Hintergrunds, Mittel zum aufeinanderfolgenden Anlegen der Luminanzpegel Reihe für Reihe an die P Pixelspalten, wobei mit der ersten Reihe von Rang 1 der Matrix begonnen und mit der N-ten Reihe von Rang N für den oder die Subframe(s) geendet wird, die der ersten Farbe nicht entsprechen, und
- zum Anzeigen der Information in einem Subframe der ersten Farbe, Mittel zum Extrahieren nur der Daten entsprechend M Reihen, die eine in der ersten Farbe anzuzeigende Information enthalten, aus dem Bildspeicher, und Mittel zum Wählen, zum Schreiben des Subframe der ersten Farbe, nur der betroffenen M Reihen, Reihe für Reihe, und mehrere Reihen gleichzeitig, wenn die Luminanzpegel für mehrere Reihen identisch sind.

7. Flüssigkristallanzeige nach Anspruch 6, bei der die Information in einer gemischten Farbe angezeigt wird, in der eine Farbe des Hintergrunds mit der ersten Farbe gemischt ist.

8. Verfahren zum Anzeigen eines Bildes auf einer Matrix-Flüssigkristallanzeige mit N Reihen und P Spalten, des sequentiellen Farbtyps mit wenigstens zwei Beleuchtungsfarben nach Anspruch 1, wobei das anzuzeigende Bild eine Information umfasst, die eine Komponente einer ersten von zwei Farben und einen Hintergrund umfasst, der die Komponente in der ersten Farbe nicht umfasst, wobei der Hintergrund und die Information durch einen Bildspeicher geliefert werden, der die Luminanzpegel von Pixeln für die Gesamtheit des anzuzeigenden Bildes für jede Farbe und für jede Reihe der Matrix enthält, wobei die Pegel für jede Reihe an die P Spalten der Matrix vor einer Beleuchtungsphase mit der Farbe entsprechend dieser Reihe angelegt werden, **dadurch gekennzeichnet, dass** zum Anzeigen der Information in einem Subframe der ersten Farbe:
- nur die Luminanzpegel entsprechend M Reihen aus dem Bildspeicher extrahiert werden, die Luminanzpunkte von ungleich null in der ersten Farbe umfassen, wobei M kleiner als N ist, und
- das aufeinanderfolgende Schreiben von M Reihen, Reihe für Reihe, zum aufeinanderfolgenden Anlegen der aus den P Pixelspalten extrahierten Luminanzpegel für jede dieser M Reihen gesteuert wird, ohne Luminanzpegel an die P Spalten während dieses Subframe für diese anderen Reihen anzulegen, worin das Schreiben von jeder von M Reihen während einer Dauer T_{L} unter Anlegen eines abzutastenden Signals (VL) an den Satz von N Abtast- und Konvertierungsschaltungen (EC) gesteuert wird, das all diesen Schaltungen gemeinsam ist und das eine Serie von binären Wörtern ist, die mit einer Frequenz F_{H} gleich oder kleiner als N/T_{L} aufeinander folgen, wobei das binäre Wort von Rang i in der Folge einen ersten Wert hat, wenn die Reihe von Rang i geschrieben werden muss, und einen anderen Wert im gegenteiligen Fall, und unter Abtastung dieses Signals aufeinanderfolgend in jeder der Abtast- und Konvertierungsschaltungen mit der Frequenz F_{H} synchron zu der Folge von N binären Wörtern, um in der Abtast- und Konvertierungsschaltung von Rang i das Wort von Rang i der Folge von N binären Wörtern abzutasten und zu konvertieren, wobei die Abtast- und Konvertierungsschaltung von Rang i das Anlegen einer gewünschten Spannung, definiert durch das binäre Wort von Rang i, an die Reihe von Pixeln von Rang i steuert.

9. Verfahren nach Anspruch 8, bei dem für den Schritt des Schreibens jeder der M Reihen, in Abhängigkeit vom binären Wort von Rang i, die Abtast- und Konvertierungsschaltung von Rang i einen Spannungspegel auswählt und an die Reihe von Rang i anlegt, der ein Auswahlpegel (VGoff) ist, wenn die Reihe geschrieben werden muss, und wenn die Reihe nicht geschrieben werden muss, ein Abwahlpegel (VGon) oder ein Zwischenpegel unter einem oder mehreren Zwischenspannungspegeln (VGint1, VGint2) ist.

10. Verfahren nach Anspruch 8, **dadurch gekennzeichnet, dass** zum Anzeigen des Hintergrunds und eventuell der Farbkomponenten der anderen Information als der ersten Farbe, aufeinanderfolgend Reihe für Reihe die Luminanzpegel an die P Pixelspalten angelegt werden, wobei mit der ersten Reihe von Rang 1 der Matrix begonnen und mit der N-ten Reihe von Rang N geendet wird, für die ein oder mehreren Subframes, die nicht der ersten Farbe entsprechen.

11. Verfahren nach einem der Ansprüche 8 bis 10, **dadurch gekennzeichnet, dass** das Muster von N aufeinanderfolgenden binären Wörtern mehrere Wörter mit dem ersten Wert hat und die anderen Wörter andere Werte haben, wenn mehrere Reihen Luminanzpegel empfangen müssen, die für ihre P Pixel identisch sind, wobei diese Reihen dann alle gleichzeitig geschrieben werden.

12. Verfahren nach Anspruch 11, bei dem die mehreren Reihen gleichzeitig geschrieben werden können, um ihre P Pixel neu zu initialisieren.

13. Verfahren nach einem der Ansprüche 8 bis 11, **dadurch gekennzeichnet, dass** in dem Muster von N aufeinanderfolgenden binären Wörtern die N Wörter alle denselben Wert haben, wenn alle Reihen der Matrix einen Neuinitialisierungspegel ihrer P Pixel empfangen müssen, wobei diese Reihen dann alle gleichzeitig geschrieben werden.

14. Verfahren nach einem der Ansprüche 8 bis 13, **dadurch gekennzeichnet, dass** die Abtast- und Konvertierungsschaltungen das Abtasten und Konvertieren einer Folge von N binären Wörtern während einer Phase des Schreibens einer Reihe unter Anlegen des Ergebnisses der Konversion der Folge von im Laufe einer vorangegangenen Periode T_{L} empfangenen N binären Wörtern an die Eingänge der Hochspannungsstufe gewährleisten.

## Claims

1. A matrix liquid crystal display having at least N rows and P columns, and comprising an image memory (MEMR) containing the luminance data for the pixels received for an image to be displayed, including data for each of M rows containing a non-zero image information item, M less than or equal to N, and a graphics processor (PRGR) that is capable of extracting from the memory the addresses of the M rows, and, for each of these, P luminance levels to be applied by P column conductors to the P pixels of the row, with a periodic duration T_{L} for writing a row, and a high-voltage stage (DRV) having N inputs and having N outputs that are each respectively connected to a respective row conductor that is common to the pixels of one and the same row of the matrix in order to allow the selection of a row of pixels for the purpose of writing luminance data to this row, the display being further **characterized in that** it comprises:
N sampling and conversion circuits (E-C) having at least one common signal input (VL) to be sampled, this input receiving from the graphics processor a pattern of N successive binary words in the course of a duration T_{L}, in which the binary words follow one another at a frequency F_{H} that is equal to at least N/T_{L}, for writing one row among the M rows, and in which the binary word of rank i in the succession has a first value if the row of rank i needs to be written and another value if not, the sampling and conversion circuits having sampling control inputs that are distinct from one another, the output of a sampling and conversion circuit of any rank i being connected to a corresponding input of rank i of the high-voltage stage and supplying this input with a voltage (VGon, VGoff) that is dependent on the binary word received,
- a sampling control circuit (RD) that is actuated at the frequency F_{H} in sync with the succession of binary words of rank i = 1 to N that are received at the common signal input of the sampling and conversion circuits, the sampling control circuit successively applying a sampling order to each of the N sampling control inputs of the sampling and conversion circuits, so as to sample and convert in the sampling and conversion circuit of rank i the binary word of rank i from the succession of N binary words,
a control input (OE) of the high-voltage stage in order to apply to the N row conductors voltages corresponding to the voltages that are present on the outputs of the sampling and conversion circuits at the end of reception of the succession of N binary words, and in order to maintain these voltages over a duration that is necessary for writing a row.

2. The matrix liquid crystal display according to claim 1, **characterized in that** the sampling and conversion circuits (E-C) are dual circuits ensuring the sampling of a succession of N binary words while applying to the inputs of the high-voltage stage (DRV) the result of the sampling and the conversion of the previously sampled succession.

3. The matrix liquid crystal display according to one of claims 1 and 2, **characterized in that** the sampling control circuit is a shift register (RD) that is actuated at the shift frequency F_{H} in sync with the succession of binary words of rank i = 1 to N that are received on the common signal input (VL) of the sampling and conversion circuits, the register having N outputs of rank i = 1 to N that are connected to the sampling control inputs, and the register successively applying to a single instance of its outputs of rank i = 1 to N a sampling control bit while the other outputs are inactive.

4. The matrix liquid crystal display according to claim 3, **characterized in that** the matrix contains k groups of N rows, the display having kxN sampling/blocking circuits (E-C1, E-C2) whose outputs are associated with the kxN rows of the matrix by means of the high-voltage stage (DRV), each output of the register simultaneously controlling the sampling control inputs of k sampling and conversion circuits, and the graphics processor (PRG) applying a succession of N groups of k binary words in parallel to k parallel inputs (VL1, VL2) that are each common to a respective group of N sampling and conversion circuits.

5. The liquid crystal display according to one of claims 3 and 4, **characterized in that** the shift register (RD) is bidirectional and has a shift direction selection input in order to make a shift alternately in one direction and then in the other for different subframes.

6. The liquid crystal display according to one of claims 1 to 5, for displaying an image having an information item for a first illumination colour component and for a background that does not have the first colour, the display having:
- in order to display the background, means for successively applying, row by row, the luminance levels to the P columns of pixels beginning with the first row of rank 1 in the matrix and finishing with the Nth row of rank N for the subframe(s) not corresponding to the first colour, and
- in order to display the information item in a subframe of the first colour, means for extracting from the image memory solely the data corresponding to M rows containing an information item to be displayed in the first colour and means for selecting, in order to write the subframe of the first colour, solely the M rows in question, row by row, and a plurality of rows simultaneously when the luminance levels are identical for a plurality of rows.

7. The liquid crystal display according to claim 6, in which said information item is displayed in a mixed colour, mixing a colour from the background and said first colour.

8. A method for displaying an image on a matrix liquid crystal display having N rows and P columns, of colour sequential type having at least two illumination colours according to claim 1, in which the image to be displayed has an information item having a component of a first of the two colours and a background that does not have a component in the first colour, the background and the information item being provided by an image memory containing the luminance levels of the pixels for the whole of the image to be displayed for each colour and for each row of the matrix and the levels being applied for each row to the P columns of the matrix before a phase of illumination with the colour corresponding to this row, **characterized in that**, in order to display the information item in a subframe of the first colour:
- solely the luminance levels corresponding to M rows having non-zero luminance points in the first colour, M less than N, are extracted from the image memory, and
- the writing of the M rows successively is controlled row by row in order to successively apply, for each of these M rows, the extracted luminance levels to the P columns of pixels without applying luminance levels to the P columns during this subframe for the other rows, where the writing of each of the M rows over a duration T_{L} is done by applying to the set of N sampling and conversion circuits (EC) a signal to be sampled (VL) that is common to all these circuits and that is a series of binary words following one another at a frequency F_{H} at least equal to N/T_{L}, where the binary word of rank i in the succession has a first value if the row of rank i needs to be written and another value if not, and by sampling this signal successively in each of the sampling and conversion circuits at the frequency F_{H} in sync with the succession of N binary words so as to sample and convert, in the sampling and conversion circuit of rank i, the word of rank i from the succession of N binary words, the sampling and conversion circuit of rank i controlling the application of a desired voltage, which is defined by the binary word of rank i, to the row of pixels of rank i.

9. The method according to claim 8, wherein, for the step of writing of each of the M lines, as a function of the binary word of rank i, the sampling and conversion circuit of rank i selects and applies a voltage level to the row of rank i, which is a selection level (VGoff) if the row needs to be written, and, if the row does not need to be written, a deselection level (VGon) or an intermediate level among one or more intermediate voltage levels (VGint1, VGint2).

10. The method according to claim 8, **characterized in that**, in order to display the background and possibly the colour components of the information item other than the first colour, the luminance levels are successively applied row by row to the P columns of pixels beginning with the first row of rank 1 in the matrix and finishing with the Nth row, of rank N, for the subframe(s) not corresponding to the first colour.

11. The method according to one of claims 8 to 10, **characterized in that** the pattern of N successive binary words has a plurality of words having the first value and the other words having other values if a plurality of rows need to receive identical luminance levels for their P pixels, these rows then all being written simultaneously.

12. The method according to claim 11, in which said plurality of rows can be written simultaneously in order to reinitialize their P pixels.

13. The method according to one of claims 8 to 11, **characterized in that** in the pattern of N successive binary words the N words all have the same value if all the rows of the matrix need to receive a reinitialization level for their P pixels, all these rows then all being written simultaneously.

14. The method according to one of claims 8 to 13, **characterized in that** the sampling and conversion circuits ensure the sampling and conversion of a succession of N binary words during a phase of writing of a row while applying to the inputs of the high-voltage stage the result of the conversion of the succession of N binary words received over the course of a previous period T_{L}.
